## Europäisches Patentamt

## European Patent Office

## Office européen des brevets

(19)

(11) Veröffentlichungsnummer : **0 357 552 B1**

(12) ## EUROPÄISCHE PATENTSCHRIFT

(45) Veröffentlichungstag der Patentschrift :
**30.09.92 Patentblatt 92/40**

(51) Int. Cl.$^5$ : **E03D 1/32**

(21) Anmeldenummer : **89810616.6**

(22) Anmeldetag : **18.08.89**

(54) **Anschlussvorrichtung an einem Einlaufventil für einen Toiletten-Spülkasten.**

(30) Priorität : **24.08.88 CH 3141/88**

(43) Veröffentlichungstag der Anmeldung :
**07.03.90 Patentblatt 90/10**

(45) Bekanntmachung des Hinweises auf die
Patenterteilung :
**30.09.92 Patentblatt 92/40**

(84) Benannte Vertragsstaaten :
**AT BE CH DE FR GB IT LI NL SE**

(56) Entgegenhaltungen :
**CH-A- 99 352**
**DE-A- 1 914 707**
**DE-A- 2 740 924**
**FR-A- 2 494 464**

(73) Patentinhaber : **Geberit AG**
**Schachenstrasse 77**
**CH-8645 Jona (CH)**

(72) Erfinder : **Von Ballmoos, Mario**
**Erlenstrasse 109**
**CH-8645 Jona (CH)**

(74) Vertreter : **Groner, Manfred et al**
**Patentanwalts-Bureau Isler AG Postfach 6940**
**CH-8023 Zürich (CH)**

EP 0 357 552 B1

## Beschreibung

Die Erfindung betrifft eine Anschlussvorrichtung nach dem Oberbegriff des unabhängigen Patentanspruchs 1.

Eine Anschlussvorrichtung dieser Art ist aus der DE-A-1 914 707 bekannt. Bei dieser ist am Ventilgehäuse ein Nippel mit Aussengewinde angebracht, der durch eine Oeffnung der Wandung des Spülkastens hindurchgesteckt ist und der von aussen mit einer Mutter fixiert ist. Bei Unterputz-Spülkästen ist diese Anschlussvorrichtung ungünstig, da das Kasteninnere nur über eine vergleichsweise kleine Revisionsöffnung zugänglich ist.

Eine ähnliche Anschlussvorrichtung ist aus der CH-A-618 227 der Anmelderin bekannt. Diese weist eine Anschlussmuffe aus Messing auf, in die ein aus Kunststoff hergestellter Ventileinsatz mit einem Ventilsitz eingesetzt ist. In der Anschlussmuffe ist ferner ein Drosseleinsatz zur Geräuschdämmung des einströmenden Wassers vorgesehen. Diese bekannte Anschlussvorrichtung besteht aus vergleichsweise vielen Einzelteilen und ist entsprechend in der Herstellung und in der Montage aufwendig. Bei dieser Vorrichtung besteht auch die Gefahr, dass sie bei der Montage unvollständig oder unrichtig zusammengebaut wird. Die Art der Befestigung des Verbindungsschlauches kann dieser Schrift nicht im Detail entnommen werden. In der praktischen Ausführung ist dieser Verbindungsschlauch mit einer Ueberwurfmutter lösbar an einem Gewindenippel der Anschlussmuffe angeschraubt. Die Länge dieser Anschlussverbindung ist konstruktionsbedingt vergleichsweise gross, so dass eine Verwendung bei einem Unterputz-Spülkasten ungünstig ist.

Weiter ist durch die CH-A-356 094 eine Anschlussvorrichtung bekannt geworden, die einen offenbar aus Metall bestehenden Körper mit einem Aussengewinde aufweist, an dem dieser Körper in ein entsprechendes Innengewinde des Ventilgehäuses eingeschraubt ist. Die Befestigung des Verbindungsschlauches erfolgt hier ebenfalls mit einer Ueberwurfmutter, die auf einen Gewindenippel aufgeschraubt ist. Bei dieser Anschlussverbindung besteht die Schwierigkeit, dass die radiale Stellung des Körpers nicht beliebig einstellbar ist, was die weitere Befestigung dieser Anschlussvorrichtung am Spülkasten erschwert.

Der Erfindung liegt die Aufgabe zugrunde, eine Anschlussvorrichtung der genannten Art zu schaffen, die in der Herstellung und der Montage einfacher und dennoch betriebssicher ist und die besonders für die Verwendung in einem Unterputz- Spülkasten geeignet ist.

Die Aufgabe wird durch die Erfindung gemäss Anspruch 1 gelöst. Die erfindungsgemässe Anschlussvorrichtung kann mit Ausnahme von Teilen des Verbindungsschlauches vollständig aus Kunststoff hergestellt werden. Nach einer Weiterbildung ist der Verbindungsschlauch mittels einer Pressverbindung fest mit dem Ventilkörper verbunden. Damit besteht die erfindungsgemässe Anschlussvorrichtung lediglich aus zwei separaten Teilen, nämlich der auf das Gehäuse des Einlaufventils aufzuschraubenden Ueberwurfmutter und dem fest mit dem Verbindungsschlauch verbundenen Ventilkörper. Eine unrichtige Montage ist hier praktisch ausgeschlossen. Die Montage an Ort ist aber sehr schnell, da lediglich noch die Ueberwurfmutter auf das Gehäuse des Einlaufventils aufgeschraubt werden muss. Die Anschlussvorrichtung eignet sich besonders für die Verwendung in einem Unterputz-Spülkasten.

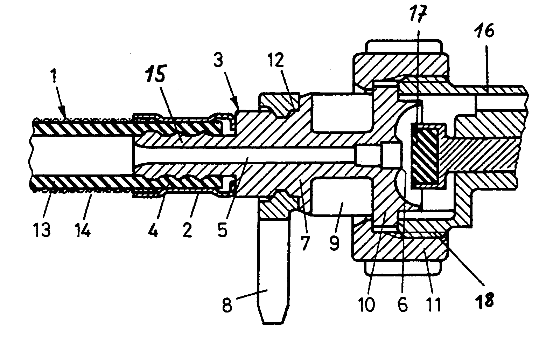

Ein Ausführungsbeispiel der Erfindung wird nachfolgend anhand der einzigen Figur, die einen Längsschnitt durch eine erfindungsgemässe Anschlussvorrichtung zeigt, näher erläutert.

Die dargestellte Anschlussvorrichtung weist einen im Spritzgussverfahren aus einem geeigneten Kunststoff hergestellten Ventilkörper 3 auf, der fest mit einem an einer hier nicht gezeigten Druckwasserleitung angeschlossenen Verbindungsschlauch 1 verbunden ist. Der Verbindungsschlauch 1 besteht aus einem inneren Schlauchstück 13 aus Gummi und einem flexiblen Mantel 14. Der Verbindungsschlauch 1 ist nicht lösbar und nicht verdrehbar mittels einer verpressten Hülse 2 aus Blech an einem am Ventilkörper 3 angeformten Nippel 15 angebracht.

Der Ventilkörper 3 ist mit einem scharfkantigen Ventilsitz 6 versehen, der in bekannter Weise mit einer beweglichen Gummidichtung 17 zusammenarbeitet. Ist wie hier dargestellt, die Gummidichtung 17 nicht am Ventilsitz 6 angedrückt, so fliesst von der Druckleitung Wasser durch einen am Ventilkörper 3 angebrachten Kanal 5 über das Einlaufventil in den Spülkasten. Dieser Kanal 5 ist wie dargestellt vor dem Ventilsitz 6 stufenförmig erweitert, wodurch die Strömungsgeschwindigkeit des Wassers gesenkt und eine wesentliche Geräuschminderung erreicht wird.

Zur dichten und lösbaren Befestigung des Ventilkörpers 3 am Gehäuse 16 des Einlaufventils ist eine ebenfalls aus Kunststoff hergestellte Ueberwurfmutter 11 vorgesehen, die auf ein entsprechendes Aussengewinde 18 des Gehäuses 16 aufgeschraubt ist und einen am Ventilkörper 3 angeformten Flansch 10 gegen das Gehäuse 16 drückt. Hinter dem Flansch 10 sind in einem mittleren Teil 7 des Ventilkörpers 3 Ausnehmungen 9 zur Reduktion der Wandstärke vorgesehen.

Auf der Aussenseite des Ventilkörpers 3 ist ein Vierkant 12 zur drehfesten Befestigung eines Halters 8 eingearbeitet. Der Halter 8 dient dazu, das Einlaufventil an einer im Spülkasten angeordneten Platine zu befestigen. In diesem Fall ist der Spülkasten ein sogenannter Unterputz-Spülkasten für den sich die Anschlussvorrichtung aufgrund ihrer kurzen Bauweise besonders eignet.

Bei der Montage des Einlaufventils wird zuerst die Ueberwurfmutter 11 bei geeigneter Stellung des Halters 8 auf das Gehäuse 16 aufgeschraubt. Nun muss lediglich noch der Halter 8 auf die Platine aufgeklipst und nachher der Verbindungsschlauch 1 an der Druckleitung angeschlossen werden. Diese Montagearbeit kann auch an schlecht zugänglicher Stelle ausserordentlich sicher und schnell durchgeführt werden.


## Patentansprüche

1. Anschlussvorrichtung an einem Einlaufventil eines Toiletten-Spükastens, mit einem Ventilkörper (3), der einen mit einer beweglichen Gummidichtung (17) des Einlaufventils zusammenwirkenden Ventilsitz (6) aufweist, mit einer Wasserzufuhrleitung (1), die an einem am Ventilkörper (3) angeformten Nippel (15) befestigt ist, mit einem am Ventilkörper (3) angeordneten Flansch (10), mit dem der Ventilkörper (3) mittels einer Ueberwurfmutter (11) am Gehäuse (16) des Einlaufventils befestigt ist und mit Mitteln zur Befestigung des Ventilkörpers (3) am Spülkasten, dadurch gekennzeichnet, dass die Mittel zur Befestigung des aus Kunststoff hergestellten Ventilkörpers (3) durch einen am Ventilkörper (3) angebrachten Halter (8) und eine im Spülkasten angeordnete Konsole, an welcher der Halter (8) befestigt ist, gebildet sind, und dass die Wasserzufuhrleitung einen am Nippel (15) angebrachten flexiblen Verbindungsschlauch (1) aufweist.

2. Anschlussvorrichtung nach Anspruch 1, dadurch gekennzeichnet, dass der Ventilkörper (3) aus Kunststoff im Spritzgussverfahren hergestellt ist und auf der Aussenseite Ausnehmungen (9) zur Reduktion der Wandstärke aufweist.

3. Anschlussvorrichtung nach Anspruch 1, dadurch gekennzeichnet, dass der Verbindungsschlauch (1) mittels Pressverbindung am Nippel (15) befestigt ist.

4. Anschlussvorrichtung nach Anspruch 1, gekennzeichnet durch einen auf der Aussenseite des Ventilkörpers (3) angebrachten Vierkant (12) zur drehfesten Befestigung des Halters (8).

5. Anschlussvorrichtung nach einem der Ansprüche 1 bis 4, gekennzeichnet durch einen den Ventilkörper (3) in Längsrichtung durchsetzenden Kanal (5), der unmittelbar vor dem Ventilsitz (6) stufenförmig erweitert ist.

6. Anschlussvorrichtung nach einem der Ansprüche 1 bis 5, dadurch gekennzeichnet, dass der Verbindungsschlauch (1) aus einem äusseren Mantel (14) aus Kunststoff und einem inneren Schlauch (13) aus Gummi besteht.

7. Anschlussvorrichtung nach Anspruch 1, dadurch gekennzeichnet, dass der Halter (8) auf die Konsole aufgeklipst ist.


## Claims

1. Connection device at an inlet valve for a toilet cistern with a valve body (3) having a valve seat (6) interacting with a movable rubber packing (17) of the inlet valve, with a water-supply pipe (1) fastened to a nipple (15) which is formed on to the valve body (3), with a valve body (3) provided with a flange (10) with which the valve body (3) is fastened by means of a clamping nut (11) to the case (16) of the inlet valve, as well as with means for the fastening of the valve body (3) at the cistern, characterised in that the means for the fastening of the synthetic material-made valve body (3) are formed by a holder (8) attached to the valve body (3) and an inside the cistern arranged bracket to which the holder (8) is fastened, and that the water-supply pipe has a flexible connecting tube (1) attached to the nipple (15).

2. Connection device according to Claim 1, characterised in that the synthetic valve body (3) is manufactured in a die-casting process and provided with recesses (9) on the outside for a reduction of the wall thickness.

3. Connection device according to Claim 1, characterised in that the flexible connection (1) is attached to the nipple (15) by means of a press fit.

4. Connection device according to Claim 1, characterised by a square bar (12) fastened to the outside of the valve body (3) for a turnable but firm fastening of the holder (8).

5. Connection device according to one of the Claims 1 to 4, characterised in that the valve body (3) is endwise penetrated by a canal (5) which immediately before the valve seat (6) is gradually enlarged.

6. Connection device according to one of the Claims 1 to 5, characterised in that the flexible connecting tube (1) consists of an outer jacket (14) of synthetic material and an inner tube (13) of rubber.

7. Connection device according to Claim 1, characterised in that the holder (8) is clipped upon the bracket.


**Revendications**

1. Dispositif de raccordement installé sur une soupape d'arrivée pour un réservoir de chasse d'eau de toilettes, comportant un corps de soupape (3), qui possède un siège de soupape (6) coopérant avec une garniture d'étanchéité mobile en caoutchouc (17) de la soupape d'entrée, et comportant une canalisation d'eau (1), qui est fixée à un raccord fileté (15) formé sur le corps de soupape (3), une bride (10) disposée sur le corps de soupape (3) et à laquelle le corps de soupape (3) est fixé à l'aide d'un écrou-raccord (11) sur le boîtier (16) de la soupape d'entrée, et des moyens pour fixer le corps de soupape (3) sur le réservoir de chasse, caractérisé en ce que les moyens de fixation du corps de soupape (3) réalisé en matière plastique sont constitués par un support (8) monté sur le corps de soupape (3) et par une console, qui est disposée dans le réservoir de chasse et à laquelle est fixé le support (8), et que la canalisation d'eau possède un tuyau souple de raccordement (1) emmanché sur le raccord fileté (15).

2. Dispositif de raccordement selon la revendication 1, caractérisé en ce que le corps de soupape (3) est réalisé en une matière plastique selon le procédé de moulage par injection et possède, dans sa face extérieure, des évidements (9) destinés à réduire l'épaisseur de paroi.

3. Dispositif de raccordement selon la revendication 1, caractérisé en ce que le tuyau de raccordement (1) est fixé au raccord fileté (11) selon une liaison à serrage.

4. Dispositif de raccordement selon la revendication 1, caractérisé par un carré (12) monté sur la face extérieure du corps de soupape (3) et servant à fixer, avec blocage en rotation, le support (8).

5. Dispositif de raccordement selon l'une des revendications 1 à 4, caractérisé par un canal (5), qui traverse dans la direction longitudinale le corps de soupape (3) et s'élargit selon une disposition étagée directement en amont du siège de soupape (6).

6. Dispositif de raccordement selon l'une des revendications 1 à 5, caractérisé en ce que le tuyau de raccordement (1) est formé par une gaine extérieure (14) en matière plastique et un tuyau intérieur (13) en caoutchouc.

7. Dispositif de raccordement selon la revendication 1, caractérisé en ce que le support (8) est fixé par encliquetage sur la console.